Europäisches Patentamt

European Patent Office

Office européen des brevets

(19)

(11) Numéro de publication : **0 034 073**
**B1**

(12) **FASCICULE DE BREVET EUROPÉEN**

(45) Date de publication du fascicule du brevet :
02.05.84

(51) Int. Cl.³ : **F 16 D   3/20**

(21) Numéro de dépôt : **81400057.6**

(22) Date de dépôt : **16.01.81**

(54) **Perfectionnements aux joints universels.**

(30) Priorité : 12.02.80 FR 8003092
05.12.80 FR 8025947

(43) Date de publication de la demande :
**19.08.81 Bulletin 81/33**

(45) Mention de la délivrance du brevet :
**02.05.84 Bulletin 84/18**

(84) Etats contractants désignés :
**DE GB IT SE**

(56) Documents cités :
**BE-A- 641 969**
**FR-A- 1 268 917**
**FR-A- 1 409 909**
**FR-A- 2 000 790**
**FR-A- 2 169 450**
**FR-A- 2 172 580**
**FR-A- 2 230 895**
**GB-A- 565 222**
**US-A- 2 194 798**
**US-A- 2 752 766**

(73) Titulaire : **SOCIETE ANONYME AUTOMOBILES CITROEN**
**117 à 167, Quai André Citroën**
**F-75747 Paris Cedex 15 (FR)**

**AUTOMOBILES PEUGEOT**
**75, avenue de la Grande Armée**
**F-75116 Paris (FR)**

(72) Inventeur : **Doré, Jacques Pierre**
**191, rue Saint-Denis**
**F-92700 Colombes (FR)**
Inventeur : **Guerlet, Bernard Guislain**
**4, Clos no 55**
**Saint-Mard F-77230 Dammartin-en-Goele (FR)**

(74) Mandataire : **Michardière, Bernard et al**
**Cabinet Plasseraud 84, rue d'Amsterdam**
**F-75009 Paris (FR)**

EP 0 034 073 B1

Jouve, 18, rue St-Denis, 75001 Paris, France

## Perfectionnements aux joints universels

L'invention est relative à un joint universel du genre de ceux qui comprennent un élément intérieur, solidaire d'un premier arbre, présentant au moins deux tourillons, régulièrement espacés, qui portent des galets, dont la surface extérieure est une zone sphérique, propres à coopérer avec des chemins de roulement à parois dures, prévus dans un élément extérieur rendu solidaire d'un second arbre, cet élément extérieur comprenant une enveloppe rigide munie de logements dans lesquels sont situés les chemins de roulement, des moyens élastiques étant prévus en liaison avec ces chemins de roulement.

Le document FR-A-1 409 909 montre un joint universel de ce genre dans lequel les chemins de roulement des galets sont formés par des garnitures en un matériau résistant mieux à l'usure que le métal du boîtier dans lequel sont prévus les logements pour ces garnitures et pour les galets. Bien qu'une telle solution soit intéressante et permette, au cours du fonctionnement, de retarder l'apparition de jeux sensibles entre les galets et les garnitures des logements, il n'en demeure pas moins qu'un tel montage ne permet pas de rattraper les jeux de fonctionnement lorsqu'ils apparaissent. En outre, un accouplement élastique supplémentaire à broches munies de tampons en élastomère engagés dans des alvéoles est prévu, notamment pour filtrer les bruits.

Le document FR-A-2 000 790 montre un joint universel d'un genre différent de celui défini précédemment puisque, d'une part, les galets ont une surface extérieure cylindrique et, d'autre part, ces galets coopèrent avec une garniture en caoutchouc, c'est-à-dire une matière molle par rapport à de l'acier ou analogue.

Dans ces conditions, on obtient bien un effet d'amortissement et de filtration des bruits, mais les efforts sont transmis suivant une génératrice du galet directement à l'élément d'amortissement qui s'écrase. Il en résulte une détérioration relativement rapide de cette garniture en caoutchouc.

L'invention a pour but, surtout, de fournir un joint universel du genre défini précédemment qui permette pratiquement de supprimer les jeux entre galets et chemins de roulement et d'obtenir une bonne isolation des bruits, tout en restant d'une réalisation simple et économique et tout en présentant des qualités de robustesse et de légèreté.

Selon l'invention, un joint universel du genre défini précédemment est caractérisé par le fait que l'ensemble est agencé de telle sorte que les moyens élastiques tendent à appliquer les parois dures des chemins de roulement contre les galets, chaque galet étant serré entre les deux parois dures délimitant un chemin de roulement, ces parois dures étant maintenues constamment en pression contre les galets par les moyens élastiques.

Selon un premier mode de réalisation, dans lequel les moyens élastiques sont prévus entre les parois des logements et les chemins de roulement, ledit élément extérieur comporte plusieurs plaques rigides conformées au moins partiellement aux galets et disposées de manière que chaque chemin de roulement soit délimité par deux plaques séparées, les susdits moyens élastiques étant formés par des organes de liaison élastiques entre chaque plaque et les parois des logements.

Un organe élastique est associé à chaque plaque, les organes élastiques associés à un même chemin de roulement étant indépendants les uns des autres.

Les organes élastiques peuvent être formés par des blocs, notamment en matière élastomère, dont la surface intérieure est liée, notamment par collage ou adhérisation, aux susdites plaques, tandis que leur surface extérieure est liée à la paroi des logements.

Avantageusement, les plaques rigides délimitant un chemin de roulement sont situées de chaque côté d'un plan passant par l'axe de l'élément extérieur et celui du chemin de roulement considéré.

De préférence, l'élément extérieur est constitué par une pièce en tôle métallique tubulaire, comportant des bossages en correspondance avec les logements, ces bossages s'étendant suivant la longueur de la pièce tubulaire et présentant deux parois sensiblement parallèles à un plan passant par l'axe de l'enveloppe et l'axe du chemin de roulement associé au logement.

Chaque plaque rigide peut être formée par une plaque de tôle, de longueur sensiblement égale à celle de l'enveloppe, la plaque rigide présentant une surface concave partiellement cylindrique de rayon égal au rayon des galets.

Les blocs élastiques associés à deux galets voisins et compris, angulairement, entre ces deux galets sont reliés l'un à l'autre de manière à former un seul bloc ; avantageusement, les plaques rigides associées à deux galets voisins et comprises angulairement entre ces deux galets sont solidaires l'une de l'autre.

Dans le cas d'un joint universel du type tripode, les blocs élastiques groupés deux à deux forment trois blocs identiques sensiblement en forme de V et respectivement disposés à cheval, par les faces intérieures du V, sur deux côtés adjacents de deux bossages.

Selon un deuxième mode de réalisation, l'élément extérieur comprend une pièce tubulaire rapportée à l'intérieur de l'enveloppe rigide et dont les parois délimitent les chemins de roulement, cette pièce tubulaire comportant des moyens propres à permettre une déformation élastique transversale desdites parois, lesquelles présentent une élasticité transversale, et constituent, au moins en partie, les susdits moyens élastiques.

Les moyens propres à permettre une déformation élastique transversale des parois limitant les chemins de roulement peuvent être formés par des ouvertures longitudinales séparant les bords d'extrémité voisins de parois limitant les chemins de roulement voisins, les deux parois limitant un même chemin de roulement étant reliées entre elles de manière à former un réceptacle, ce réceptacle étant lui-même lié à la pièce tubulaire suivant une bande longitudinale, dans sa zone la plus éloignée radialement de l'axe du joint universel.

Les parois délimitant un même chemin de roulement peuvent être formées par deux parties de la pièce tubulaire découpées de part et d'autre de la susdite bande longitudinale, les parties découpées étant pliées et déformées de manière à constituer les susdites parois, la longueur des parties découpées étant inférieure à celle de la pièce tubulaire de sorte qu'une ceinture, totalement fermée, subsiste à chaque extrémité longitudinale de la pièce tubulaire.

De préférence, une barrette longitudinale subsiste dans les espaces libérés après découpage et pliage de deux parois correspondant à deux chemins de roulement voisins.

Dans le cas d'un joint du type tripode présentant trois tourillons régulièrement espacés, les deux ceintures d'extrémité longitudinales de la pièce tubulaire ont un contour sensiblement triangulaire, chacun des côtés étant réuni par une portion de cercle au côté voisin ; la bande longitudinale, de part et d'autre de laquelle sont situées les deux parties limitant un chemin de roulement, est située au niveau de chacune des portions de cercles des ceintures.

Selon une variante, les moyens propres à permettre une déformation élastique transversale des parois limitant les chemins de roulement comprennent au moins un pliage dirigé vers l'extérieur, propre à relier deux parois limitant deux chemins de roulement voisins différents.

La pièce tubulaire est avantageusement réalisée en acier du type acier à ressort.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui ne sont nullement limitatifs.

La figure 1, de ces dessins, est une coupe axiale suivant I-I figure 2 d'un joint universel conforme au premier mode de réalisation de l'invention.

La figure 2 est une coupe suivant II-II figure 1.

La figure 3 est une coupe suivant III-III figure 1.

La figure 4 est une coupe partielle suivant IV-IV figure 1.

La figure 5 montre une variante de réalisation de l'élément extérieur.

La figure 6 est une coupe axiale d'un joint universel du genre tripode, conforme au deuxième mode de réalisation.

La figure 7 est une coupe suivant VII-VII figure 6.

La figure 8 est une coupe partielle illustrant une variante de réalisation.

La figure 9 est une vue en perspective de la pièce tubulaire du joint des figures 6 à 8.

La figure 10, enfin, est une vue en perspective d'une variante de réalisation de la pièce tubulaire.

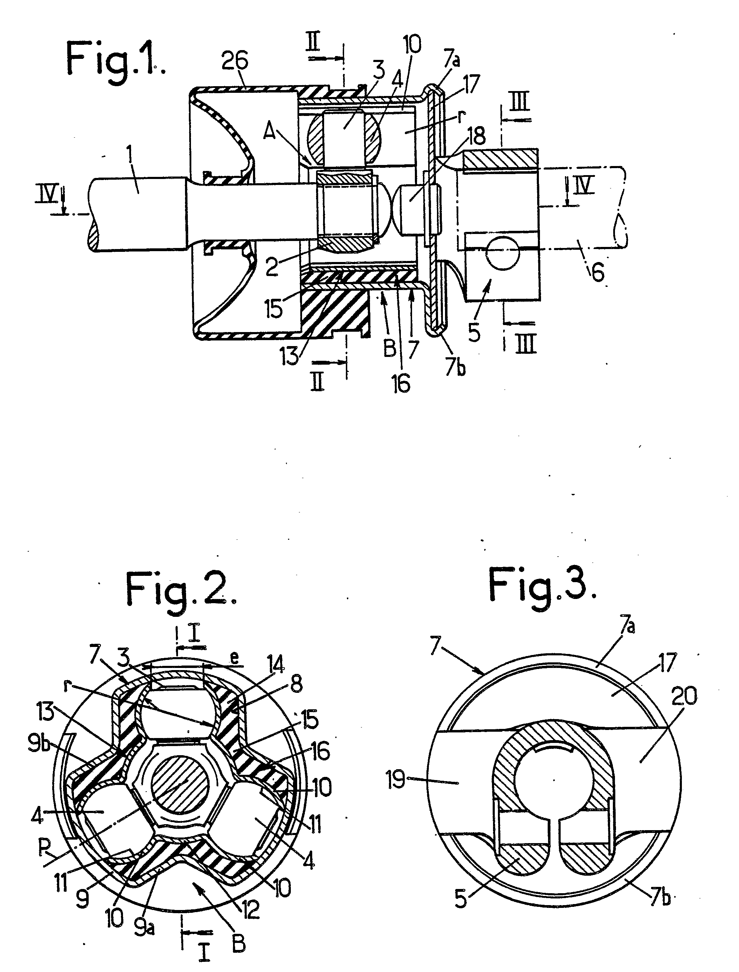

En se reportant aux dessins, plus particulièrement aux figures 1 à 3, on peut voir un joint universel du type tripode destiné à une direction de véhicule automobile.

Ce joint comporte un élément intérieur A solidaire d'un premier arbre 1, ou arbre mené, et constitué par un moyeu 2 présentant trois tourillons 3, régulièrement espacés. Chaque tourillon porte un galet 4 dont la surface extérieure est une zone sphérique.

Les galets 4 sont propres à coopérer avec des chemins de roulement r prévus dans un élément extérieur B.

Cet élément extérieur B est solidaire d'une pièce 5, agencée en collier de serrage, dans laquelle un second arbre 6, ou arbre menant, est destiné à être introduit et bloqué. Ce second arbre est ainsi rendu solidaire de l'élément extérieur B. Cet élément extérieur B comprend une enveloppe rigide 7 munie de logements 8 dans lesquels sont situés les chemins de roulement r.

L'enveloppe rigide 7 est constituée par une pièce en tôle métallique tubulaire présentant, extérieurement, trois bossages identiques 9, régulièrement espacés en correspondance avec les logements 8.

Chaque bossage 9 présente deux parois 9a, 9b, sensiblement parallèles au plan P passant par l'axe de l'enveloppe 7 et par celui du chemin de roulement r associé au bossage 9.

L'élément extérieur B comporte plusieurs plaques rigides 10, conformées, au moins partiellement, aux galets 4 ; chaque chemin de roulement r est délimité par deux plaques 10 formant des pistes, séparées et indépendantes l'une de l'autre. Ces plaques sont situées de chaque côté du plan P.

Les zones des plaques conformées aux galets présentent des surfaces concaves cylindriques 11 de rayon sensiblement égal à celui des galets 4.

Les plaques rigides 10 associées à deux galets voisins, et comprises angulairement entre ces deux galets sont solidaires l'une de l'autre par une partie intermédiaire 12. Ainsi, comme visible sur la figure 2, l'ensemble des plaques 10 forme trois pièces monobloc 13, chaque pièce comportant deux plaques 10 reliées par la partie intermédiaire 12. Les extrémités voisines de deux pièces 13 sont séparées par un espace e (fig. 2) situé radialement vers l'extérieur par rapport à l'extrémité des tourillons 3.

Des organes de liaison élastiques sont prévus entre chaque plaque rigide 10 et les parois des logements 8 de l'enveloppe 7, ces organes étant propres à appliquer les plaques 10 contre les galets 4.

Les organes sont formés par des blocs élastiques 14, notamment en matière élastomère, dont la surface intérieure est liée par adhérisation ou collage, aux plaques 10, tandis que leur surface extérieure est liée, également par adhérisation ou collage, aux parois des logements 8. Les blocs élastiques 14, associés à deux galets voisins 4 et compris, angulairement, entre ces deux galets, sont reliés l'un à l'autre par une partie intermédiaire 15 de manière à former un seul bloc élastique 16. Ce bloc 16 a sensiblement la forme d'un V et est disposé à cheval, par l'intérieur des branches du V, comme visible sur la figure 2, sur deux côtés adjacents de deux bossages 9. L'extérieur du bloc 16 est adhérisé à la pièce 13.

Les blocs élastiques 16 associés à chaque pièce 13 sont indépendants l'un de l'autre et également séparés par l'espace e comme visible sur la figure 2. Ces blocs s'étendent suivant toute la longueur des pièces 13, comme visible sur la figure 1.

L'ensemble est tel que, lorsque le joint est monté, c'est-à-dire lorsque les galets 4 sont introduits dans les deux plaques 10 délimitant le chemin r, ces plaques étant maintenues constamment en pression contre les galets par les blocs élastiques 14, 16.

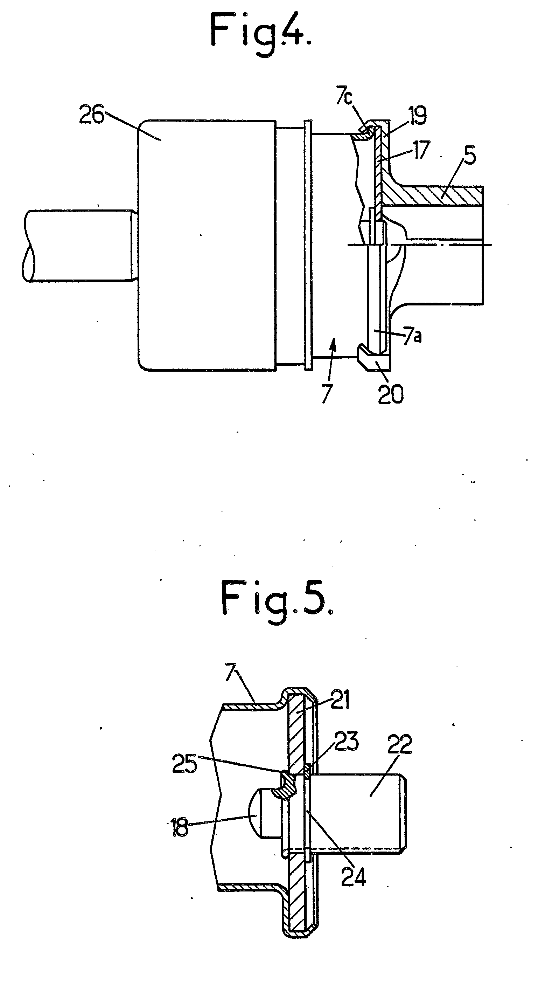

L'enveloppe tubulaire 7 peut, selon une première solution montrée sur les figures 1 à 4, être sertie partiellement par deux zones opposées 7a, 7b sur le bord d'une plaque de fond 17 métallique, circulaire. Cette plaque 17 comporte, dans sa partie centrale, un pion 18, sur lequel prend appui l'arbre 1. La pièce 5, formant collier de serrage, présente deux branches 19, 20, diamétralement opposées situées dans un plan perpendiculaire à l'axe de l'enveloppe 7. Comme visible sur la figure 4, ces branches viennent recouvrir, à leur extrémité radiale, à la fois une zone 7c du bord de l'enveloppe 7 et une zone de la plaque 17 ; l'extrémité radiale des deux branches 19, 20, est sertie sur l'empilage formé par ces deux zones. Au niveau des extrémités radiales des branches 19, 20, les zones 7a, 7b de l'enveloppe 7 comportent donc une échancrure pour permettre le sertissage des extrémités des branches 19 et 20.

Selon une autre solution, montrée sur la figure 5, l'enveloppe tubulaire 7 est sertie autour d'une plaque circulaire 21 montée sur une pièce filetée 22 dont est solidaire l'arbre menant 2 (non représenté sur cette figure 5). La pièce 22 comporte le pion 18. La plaque circulaire 21 est arrêtée axialement sur la pièce 22, d'une part, par une bague élastique fendue 23 engagée dans une gorge 24 de la pièce 22 et d'autre part par sertissage 25 de l'extrémité de la pièce 22.

Un soufflet 26 en matière élastomère entoure l'extrémité ouverte de l'enveloppe et l'arbre 1.

Lors du fonctionnement du joint, le jeu entre les galets 4 et les plaques 10 (déterminant les chemins de roulement) est supprimé en permanence du fait que ces plaques 10, indépendantes les unes des autres, sont poussées constamment par les blocs élastiques 14 contre les galets.

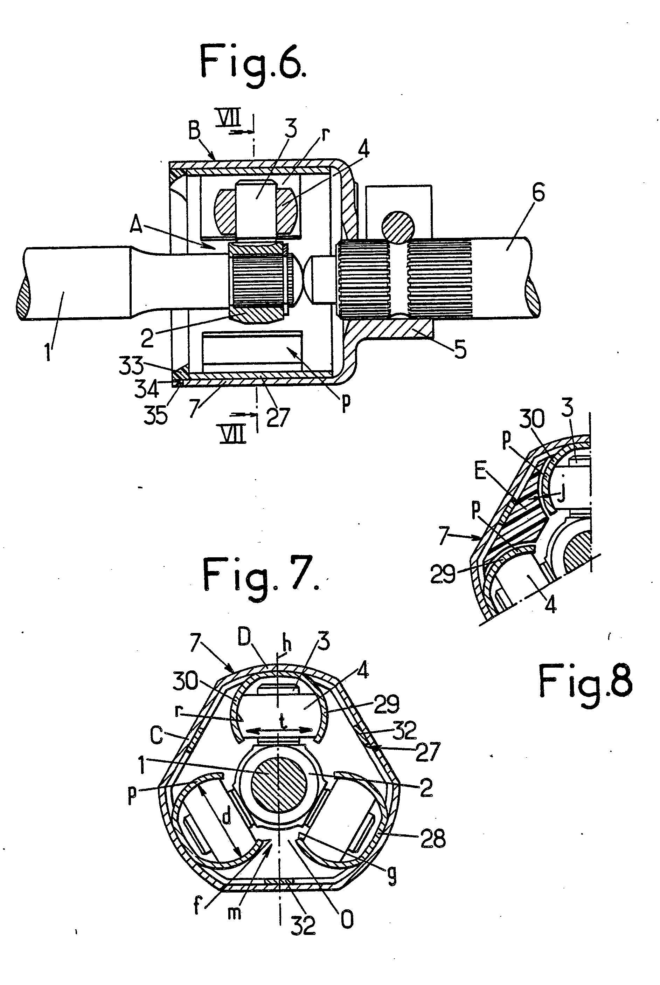

En se reportant à la figure 6, et aux figures suivantes 7 à 10, on peut voir un autre mode de réalisation d'un joint universel du genre tripode selon l'invention.

Les mêmes références ont été utilisées pour désigner des éléments identiques ou jouant des rôles semblables à des éléments déjà décrits pour les figures 1 à 5.

On retrouve, dans ce joint universel, l'élément intérieur A, solidaire du premier arbre 1, et formé par le moyeu 2 bloqué sur cet arbre, et présentant trois tourillons 3 munis de galets 4.

Ces galets 4 sont propres à coopérer avec les chemins de roulement r prévus dans l'élément extérieur B rendu solidaire du second arbre 6 par la pièce 5 en forme de collier. Cet élément extérieur B comprend l'enveloppe rigide 7 en forme de bol, de section transversale sensiblement triangulaire ; comme visible sur la figure 7, cette section transversale comporte des côtés C rectilignes reliés par des portions de cercle D.

A l'intérieur de l'enveloppe 7 est emboîtée une pièce tubulaire 27 comportant des parois p délimitant des logements formant les chemins de roulement r. La pièce tubulaire 27 comporte des moyens m propres à permettre une déformation élastique transversale des parois p limitant les chemins de roulement r, de telle sorte que les galets 4 puissent être montés serrés entre ces parois p pour éviter tout jeu circonférentiel entre les parois et les galets. Ces parois présentent, elles-mêmes, une élasticité transversale.

Les parois p délimitant un même chemin de roulement peuvent s'écarter élastiquement suivant une direction t (fig. 7) orthogonale au plan moyen h du chemin de roulement considéré, ce plan h passant par l'axe de l'enveloppe 7.

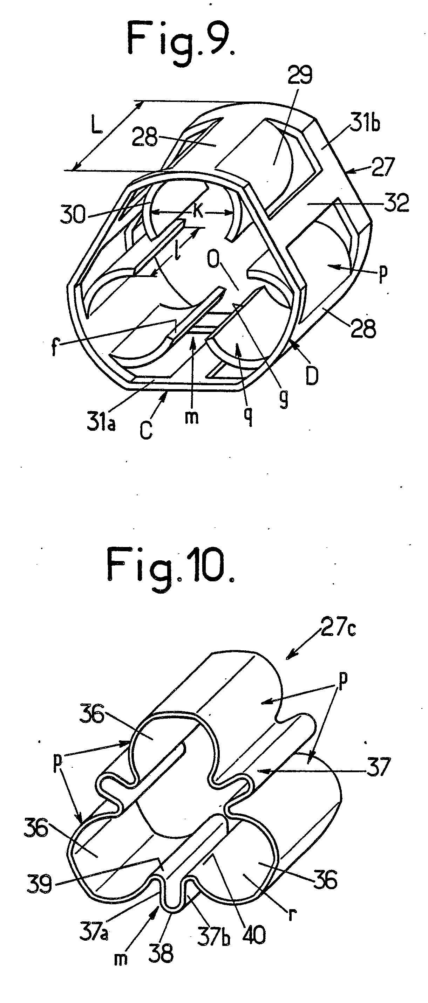

Selon le mode de réalisation des figures 6 à 9, les moyens m propres à permettre une déformation élastique transversale des parois p sont formés par des ouvertures longitudinales 0 (fig. 7 et 9) séparant les bords f, g, d'extrémité voisins des parois limitant des chemins de roulement voisins. Les deux parois p limitant un même chemin de roulement sont reliées entre elles de manière à former un réceptacle q ; ce réceptacle est lui-même lié à la pièce tubulaire 27 suivant une bande longitudinale 28, dans sa zone la plus éloignée radialement de l'axe du joint universel.

Les parois p délimitant un même chemin de roulement sont formées par deux parties 29, 30 de la pièce tubulaire 27 (voir fig. 9) découpées de part et d'autre de la bande longitudinale centrale 28 située au milieu de chacune des portions de cercle D. Ces parties découpées 29 et 30 sont pliées et déformées afin de présenter une section en arc de cercle. La longueur l des parties 29 et 30 est inférieure à la longueur L de la pièce tubulaire 27 de telle sorte qu'une ceinture totalement fermée 31a, 31b subsiste à chaque extrémité longitudinale de la pièce tubulaire 27.

Une barrette longitudinale 32, reliant les ceintures 31a, 31b, comme bien visible sur la figure 9, subsiste entre les espaces libérés après découpage et pliage de deux parois p correspondant à deux chemins de roulement voisins. Dans le cas d'un joint tripode, trois barrettes 32 sont présentes et régulièrement espacées.

La pièce tubulaire 27 est arrêtée axialement, par rapport à l'enveloppe 7, au moyen d'un anneau 33 (fig. 6) notamment réalisé en matière plastique, comportant des ergots 34, propres à être clipsés, c'est-à-dire à être engagés par déformation élastique, dans des trous 35 de l'enveloppe 7.

Cette enveloppe 7 est réalisée, par exemple, en acier à faible teneur en carbone pouvant être facilement extrudé. La pièce tubulaire 27 est réalisée en acier du genre acier à ressort ; la largeur k des chemins de roulement (fig. 9) c'est-à-dire le diamètre de la fraction de section circulaire limitée par les parties découpées 29, 30, à l'état libre, est sensiblement inférieur au diamètre d des galets 4.

Lors de l'introduction des galets dans les chemins de roulement, les parois p délimitant le même chemin de roulement sont écartées par le galet introduit dans ce chemin de roulement, et exercent sur ce galet, du fait de leur élasticité, un léger serrage ; tout jeu circonférentiel est ainsi évité entre les parois p du chemin de roulement et la surface du galet 4.

Les galets 4 transmettent à la pièce tubulaire 27 le mouvement de rotation de l'arbre 1, par leur action contre les chemins de roulement ; la pièce tubulaire 27 transmet ce mouvement de rotation à l'enveloppe 7 par le contact qui s'établit suivant les côtés C de la pièce 27 ; le mouvement de rotation de l'arbre 1 est ainsi transmis à l'arbre 6.

Sur la figure 8, on a représenté une variante de réalisation selon laquelle un bloc E, par exemple en matière plastique est prévu entre deux parois de chemins de roulement adjacents. Ce bloc est monté avec un jeu j, relativement à la paroi, de manière à limiter la déformation élastique de la paroi par sa mise en butée contre le bloc.

En se reportant à la figure 10, on peut voir une variante de réalisation 27c de la pièce tubulaire qui présente une section transversale continue sur toute sa longueur. Les parois p limitant les chemins de roulement r définissent trois logements 36 pour les galets 4.

Les moyens m propres à permettre une élasticité transversale des parois p comprennent au moins un pliage 37 réalisé entre chacun des logements 36 et propre à relier deux parois p limitant deux chemins de roulement voisins ; le pliage 37 est dirigé vers l'extérieur et comporte deux zones longitudinales 37a, 37b, orientées sensiblement radialement, reliées par une zone arrondie 38 tournant sa convexité vers l'extérieur. La zone 37a est reliée à une paroi p d'un chemin de roulement par une zone arrondie 39 tournant sa convexité vers l'intérieur, tandis que la zone 37b est reliée à la paroi p du chemin de roulement voisin par une zone arrondie 40 tournant également sa convexité vers l'intérieur. Le pliage 37 forme une sorte de soufflet déformable.

Grâce à la possibilité de déformation des parois p par élasticité transversale, il est encore possible, selon la variante de la fig. 10, de monter les galets 4 dans les chemins de roulement avec un serrage supprimant tout jeu circonférentiel. Le montage de la pièce tubulaire 27c dans l'enveloppe 7 est effectué de la même manière que celle décrite avec référence aux figures 6 à 9.

La pièce tubulaire 27c peut être réalisée par tréfilage ou déformation.

Un joint universel conforme à l'invention est d'un fonctionnement particulièrement silencieux et sans jeu puisque tous les jeux entre les galets et les parois des chemins de roulement sont supprimés, même en cours d'usure.

Un tel joint assure une bonne isolation des vibrations, est robuste tout en restant léger. Il est d'une réalisation simple et économique. Il peut être utilisé, notamment, dans une direction de véhicule automobile.

Il convient de noter que l'invention peut s'appliquer à des joints autres que les joints tripodes, notamment à des joints du type bipode.

## Revendications

1. Joint universel comprenant un élément intérieur (A), solidaire d'un premier arbre (1), présentant au moins deux tourillons (3) régulièrement espacés, qui portent des galets (4), dont la surface extérieure est une zone sphérique, propres à coopérer avec des chemins de roulement (r) à parois dures, prévus dans un élément extérieur (B) rendu solidaire d'un second arbre (6), cet élément extérieur comprenant une enveloppe rigide (7) munie de logements dans lesquels sont situés les chemins de roulement, des moyens élastiques étant prévus en liaison avec ces chemins de roulement, caractérisé par le fait que l'ensemble est agencé de telle sorte que les moyens élastiques (14 ; p) tendent à appliquer les parois dures (10, p) des chemins de roulement contre les galets (4), chaque galet étant serré entre les deux parois dures délimitant un chemin de roulement, ces parois dures étant maintenues constamment en pression contre les galets par les moyens élastiques.

2. Joint universel selon la revendication 1 dans lequel les moyens élastiques (14) sont prévus entre les parois (8) des logements et les chemins de roulement, caractérisé par le fait que ledit élément extérieur (7) comporte plusieurs plaques rigides (10) conformées au moins partiellement aux galets (4) et disposées de manière que chaque chemin de roulement (r) soit délimité par deux plaques séparées, les susdits moyens élastiques étant formés par des organes de liaison élastiques (14) entre chaque plaque rigide et les parois des logements (8).

3. Joint universel selon la revendication 1 ou 2, caractérisé par le fait qu'un organe élastique (14) est associé à chaque plaque (10), les organes élastiques associés à un même chemin de roulement étant indépendants les uns des autres.

4. Joint universel selon la revendication 2 ou 3, caractérisé par le fait que les organes élastiques sont formés par des blocs (14), notamment en matière élastomère, dont la surface intérieure est liée, notamment par collage ou adhérisation, aux susdites plaques (10), tandis que leur surface extérieure est liée à la paroi des logements (8).

5. Joint universel selon l'une quelconque des revendications précédentes, caractérisé par le fait que les plaques rigides (10) délimitant un chemin de roulement sont situées de chaque côté d'un plan (P) passant par l'axe de l'élément extérieur (7) et celui du chemin de roulement (r) considéré.

6. Joint universel selon l'une quelconque des revendications précédentes, caractérisé par le fait que l'élément extérieur (7) est constitué par une pièce en tôle métallique tubulaire, comportant des bossages (9) en correspondance avec les logements (8), ces bossages s'étendant suivant la longueur de la pièce tubulaire et présentant deux parois (9a, 9b), sensiblement parallèles à un plan (P) passant par l'axe de l'enveloppe et l'axe du chemin de roulement associé au logement.

7. Joint universel selon l'une quelconque des revendications précédentes, caractérisé par le fait que chaque plaque rigide (10) est formée par une plaque de tôle métallique, de longueur sensiblement égale à celle de l'enveloppe, la plaque rigide présentant une surface concave (11) partiellement cylindrique, de rayon sensiblement égal au rayon des galets.

8. Joint universel selon la revendication 4 ou l'ensemble de la revendication 4 et de l'une quelconque des revendications 5 à 7, caractérisé par le fait que les blocs élastiques (14) associés à deux galets voisins et compris, angulairement, entre ces deux galets sont reliés l'un à l'autre de manière à former un seul bloc (16).

9. Joint universel selon la revendication 8, caractérisé par le fait que les plaques rigides (10) associées à deux galets voisins et comprises angulairement entre ces deux galets sont solidaires l'une de l'autre.

10. Joint universel tripode selon la revendication 8 ou 9, caractérisé par le fait que les blocs élastiques (14) groupées deux à deux, forment trois blocs identiques (16) sensiblement en forme de V et respectivement disposés à cheval, par les faces intérieures du V, sur deux côtés adjacents de deux bossages (9).

11. Joint universel selon la revendication 1, caractérisé par le fait que l'élément extérieur (B) comprend une pièce tubulaire (27) rapportée à l'intérieur de l'enveloppe rigide (7) et dont les parois (p) délimitent les chemins de roulement (r), cette pièce tubulaire (27) comportant des moyens (m) propres à permettre une déformation élastique transversale des parois (p) lesquelles présentent une élasticité transversale et constituent, au moins en partie, les susdits moyens élastiques.

12. Joint universel selon la revendication 11, caractérisé par le fait que les susdits moyens (m) propres à permettre une déformation élastique transversale des parois (p) sont formés par des ouvertures longitudinales (O) séparant les bords (f, g) d'extrémité voisins de parois (p) limitant des chemins de roulement voisins, les deux parois limitant un même chemin de roulement étant reliées entre elles de manière à former un réceptacle (q), ce réceptacle étant lui-même lié à la pièce tubulaire (27) suivant une bande longitudinale (28) dans sa zone la plus éloignée radialement de l'axe du joint universel.

13. Joint universel selon la revendication 12, caractérisé par le fait que les parois (p) délimitant un même chemin de roulement sont formées par deux parties (29, 30) de la pièce tubulaire découpées de part et d'autre de la susdite bande longitudinale (28), les parties découpées étant pliées et déformées de manière à constituer les susdites parois, la longueur (l) des parties découpées étant inférieure à celle (L) de la pièce tubulaire de sorte qu'une ceinture (31a, 31b) totalement fermée subsiste à chaque extrémité longitudinale de la pièce tubulaire (27).

14. Joint universel selon la revendication 13, caractérisé par le fait qu'une barrette longitudinale (32) subsiste entre les espaces libérés après découpage et pliage de deux parois (29, 30) correspondant à deux chemins de roulement voisins.

15. Joint universel selon l'une quelconque des revendications 12 à 14, caractérisé par le fait qu'un bloc (E), notamment en matière plastique, est prévu entre deux parois (p) de chemins de roulement adjacents, ce bloc étant monté avec un jeu (j) relativement à la paroi de manière à limiter la déformation élastique de la paroi par sa mise en butée contre le bloc.

16. Joint universel selon la revendication 11, caractérisé par le fait que les moyens (m) propres à permettre une déformation élastique transversale des parois comprennent un pliage (37) dirigé vers l'extérieur, propre à relier deux parois (p) limitant deux chemins de roulement voisins différents.

17. Joint universel selon l'une quelconque des revendications 11 à 16, caractérisé par le fait que la pièce tubulaire est réalisée en acier à ressort.

18. Joint universel selon l'une quelconque des revendications précédentes, caractérisé par le fait que la largeur (k) du chemin de roulement défini par les parois (p), à l'état libre, est inférieure au diamètre des galets (4).

**Claims**

1. Universal joint comprising an inner element (A) rigid with a first shaft (1) having at least two regularly spaced journals (3) which carry rollers (4), the outer surface of which is a spherical zone and which are adapted to co-operate with raceways (r) having hard walls, provided in an outer element (B) rigid with a second shaft (6), said outer element comprising a rigid casing (7) in which there are seatings in which the raceways are housed, resilient means being provided in conjunction with these raceways, characterised in that the whole is so devised that the resilient means (14 ; p) tend to apply the hard walls (10 ; p) of the raceways against the rollers (4), each roller being gripped between the two hard walls which define a raceway, these hard walls being maintained constantly applying pressure against the rollers via the resilient means.

2. Universal joint according to Claim 1 in which the resilient means (14) are provided between the walls (8) of the seatings and the raceways, characterised in that the said outer element (7) comprises a plurality of rigid plates (10) at least partially conformed to match the rollers (4) and so disposed that each raceway (r) is bounded by two separate plates, the aforesaid resilient means being formed by resilient connecting means (14) between each rigid plate and the walls of the seatings (8).

3. Universal joint according to Claim 1 or 2, characterised in that a resilient member (14) is associated with each plate (10), the resilient members associated with one and the same raceway being independent of one another.

4. Universal joint according to Claim 2 or 3, characterised in that the resilient members are formed by blocks (14), particularly of elastomeric material, of which the inner surface is connected, particularly gluing or adhesive attachment, to the above-mentioned plates (10), while their outer surface is connected to the wall of the seatings (8).

5. Universal joint according to any one of the preceding Claims, characterised in that the rigid plates (10) defining a raceway are situated on either side of a plane (p) passing through the axis of the outer element (7) and that of the raceway (r) in question.

6. Universal joint according to any one of the preceding Claims, characterised in that the outer element (7) consists of a piece made from tubular metal plate comprising bosses (9) corresponding to the seatings (8), the said bossings extending according to the length of the tubular member and having two walls (9a, 9b) substantially parallel with a plane (P) passing through the axis of the casing and the axis of the raceway associated with the seating.

7. Universal joint according to any one of the preceding Claims, characterised in that each rigid plate (10) is formed by a sheet of metal plate of a length substantially equal to that of the casing, the rigid plate having a concave and partially clindrical surface (11), of a radius substantially equal to the radius of the rollers.

8. Universal joint according to Claim 4 or the whole of Claim 4 and any one of Claims 5 to 7, characterised in that the resilient blocks (14) associated with two adjacent rollers comprised angularly between these two rollers are connected one to the other in such a way as to form a single block (16).

9. Universal joint according to Claim 8, characterised in that the rigid plates (10) associated with two adjacent rollers and comprised angularly between these two rollers are rigid the one with the other.

10. Tripod universal joint according to Claim 8 or 9, characterised in that the resilient blocks (14), grouped in twos, form three identical blocks (16) which are substantially V-shaped and which are respectively disposed so that their inner faces of the V straddle the two adjacent sides of two bosses (9).

11. Universal joint according to Claim 1, characterised in that the outer element (B) comprises a tubular part (27) which is inserted on the interior of the rigid casing (7) and of which the walls (p) define the raceways (r), the said tubular member (27) comprising means (m) adapted to permit of transverse elastic deformation of the walls (p) which exhibit a transverse elasticity and which at least partially constitute the said resilient means.

12. Universal joint according to Claim 11, characterised in that the aforesaid means (m) which are adapted to permit of transverse elastic deformation of the walls (p) are formed by longitudinal openings (O) separating the edges (f, g) of adjacent ends of walls (p) defining adjacent raceways, the two walls defining one and the same raceway being connected inter se in such a way as to form a receptable (q) which is itself connected to the tubular member (27) along a longitudinal strip (28) in its zone which is the most radially remote from the axis of the universal joint.

13. Universal joint according to Claim 12, characterised in that the walls (p) defining one and the same raceway are formed by two parts (29, 30) of the tubular member which are cut out on either side of the said longitudinal strip (28), the cut out parts being folded over and deformed in such a way as to constitute the said walls, the length (1) of the cut out parts being less than that (L) of the tubular member so that a totally closed belt (31a, 31b) remains at each longitudinal end of the tubular member (27).

14. Universal joint according to Claim 13, characterised in that a longitudinal strip (32) remains between the spaces left after cutting out and folding over the two walls (29, 30) corresponding to two adjacent raceways.

15. Universal joint according to any one of Claims 12 to 14, characterised in that a block (E), particularly of plastics material, is provided between two walls (p) of adjacent raceways, the said block being mounted with a clearance (j) relative to the wall in such a way as to limit the elastic deformation of the wall by abutting against the block.

16. Universal joint according to Claim 11, characterised in that the means (m) adapted to permit a transverse elastic deformation of the walls comprise a bend (37) which is directed outwardly and which is capable of connecting two walls (p) defining two different adjacent raceways.

17. Universal joint according to any one of Claims 11 to 16, characterised in that the tubular member is made from spring steel.

18. Universal joint according to any one of the preceding Claims, characterised in that the width (k) of the raceway defined by the walls (p), in the free state, is less than the diameter of the rollers (4).

**Ansprüche**

1. Kreuzgelenk mit einem inneren Element (A), das mit einer ersten Welle (1) fest verbunden ist und wenigstens zwei in regelmäßigem Abstand angeordnete Zapfen (3) aufweist, die Wälzkörper (4) tragen, deren Außenfläche eine sphärische Zone bildet, die mit mit harten Wandungen ausgestatteten Wälzbahnen (r) zusammenwirkt, welche in einem äußeren Element (B) vorgesehen sind, das mit einer zweiten Welle fest verbunden ist und ein starres Gehäuse (7) mit Aufnahmen aufweist, in denen sich die genannten Wälzbahnen (r) befinden, sowie mit elastischen Mitteln, die mit den Wälzbahnen (r) in Verbindung stehen, dadurch gekennzeichnet, daß die Gesamtanordnung in der Weise ausgebildet ist, daß die elastischen Mittel (14 ; p) die harten Wandungen (10, p) der Wälzbahnen (r) zur Anlage gegen die Wälzkörper (4) spannen, wobei jeder Wälzkörper (4) zwischen den beiden eine Wälzbahn begrenzenden harten Wandungen eingeschlossen ist und letztere von den elastischen Mitteln konstant unter Spannung gegen die Wälzkörper gehalten sind.

2. Kreuzgelenk nach Anspruch 1 bei welchem die elastischen Mittel (14) zwischen den Wandungen (8) der Aufnahmen und den Wälzbahnen befinden, dadurch gekennzeichnet, daß das genannte äußere Element (7) mehrere starre Platten (10) umfaßt, die in ihrer Form wenigstens teilweise an die Wälzkörper (4) angepaßt und derart angeordnet sind, daß jede Wälzbahn (r) von zwei getrennten Platten begrenzt ist, und daß die elastischen Mittel von elastischen Verbindungsorganen (14) für die elastische Verbindung zwischen jeder starren Platte und den Wandungen der Aufnahmen (8) gebildet sind.

3. Kreuzgelenk nach Anspruch 1 oder 2, dadurch gekennzeichnet, daß jeder Platte (10) ein elastisches Organ (14) zugeordnet ist und daß die ein und derselben Wälzbahn zugeordneten elastischen Organe voneinander unabhängig sind.

4. Kreuzgelenk nach Anspruch 1 oder 2, dadurch gekennzeichnet, daß die elastischen Organe von Blöcken (14) gebildet sind, die vorzugsweise aus elastomerem Material bestehen und deren Innenfläche vorzugsweise durch eine Klebe- oder Haftverbindung mit den genannten Platten (10) verbunden ist, während ihre Außenfläche mit der Wandung der Aufnahmen (8) verbunden ist.

5. Kreuzgelenk nach einem der vorhergehenden Ansprüche, dadurch gekennzeichnet, daß die eine Wälzbahn begrenzenden starren Platten (10) auf den beiden Seiten einer Ebene (P) liegen, welche durch die Achse des äußeren Elementes (7) und diejenige der jeweiligen Wälzbahn (r) verläuft.

6. Kreuzgelenk nach einem der vorhergehenden Ansprüche, dadurch gekennzeichnet, daß das äußere Element (7) von einem rohrförmigen Metallblechteil gebildet ist, das den Aufnahmen (8) entsprechende Vorsprünge besitzt, welche sich über die Länge des röhrenförmigen Metallblechteiles erstrecken und zwei Wandungen (9a, 9b) darstellen, die im wesentlichen parallel zu einer Ebene (P) verlaufen, welche die Achse des Gehäuses sowie die Achse der der jeweiligen Aufnahme zugeordneten Wälzbahn enthält.

7. Kreuzgelenk nach einem der vorhergehenden Ansprüche, dadurch gekennzeichnet, daß jede starre Platte (10) von einer Metallblechplatte gebildet ist, deren Länge im wesentlichen derjenigen des Gehäuses entspricht, und daß die starre Platte eine konkave, teilzylindrische Oberfläche (11) aufweist, deren Radius im wesentlichen demjenigen der Wälzkörper entspricht.

8. Kreuzgelenk nach Anspruch 4 oder in Verbindung mit einem oder mehreren der Ansprüche 5 bis 7, dadurch gekennzeichnet, daß die zwei benachbarten Wälzkörpern zugeordneten und im Winkelbereich zwischen diesen beiden Wälzkörpern liegenden elastischen Blöcke (14) derart miteinander verbunden sind, daß sie einen einzigen Block (16) bilden.

9. Kreuzgelenk nach Anspruch 8, dadurch gekennzeichnet, daß die starren Platten (10), die zwei benachbarten Wälzkörpern zugeordnet sind und im Winkelbereich zwischen diesen liegen, fest miteinander verbunden sind.

10. Dreifuß-Kreuzgelenk nach Anspruch 8 oder 9, dadurch gekennzeichnet, daß die paarweise gruppierten elastischen Blöcke (14) drei identische V-förmige Blöcke (16) bilden, die mit den Innenseiten ihrer V-Schenkel rittlings auf zwei aneinandergrenzenden Seiten zweier Vorsprünge (9) angeordnet sind.

11. Kreuzgelenk nach Anspruch 1, dadurch gekennzeichnet, daß das äußere Element (B) ein rohrförmiges Teil (27) umfaßt, welches in das starre Gehäuse (7) eingesetzt ist, und dessen Wandungen (p) die Wälzbahnen (r) begrenzen, daß das rohrförmige Teil (27) Mittel (m) umfaßt, die eine elastische Querverformung der Wandungen (p) ermöglichen, und daß die Wandungen (p) eine Querelastizität aufweisen und zumindest teilweise die genannten elastischen Mittel darstellen.

12. Kreuzgelenk nach Anspruch 11, dadurch gekennzeichnet, daß die genannten Mittel (m), die eine elastische Querverformung der Wandungen (p) ermöglichen, von longitudinalen Öffnungen (O) gebildet sind, welche die benachbarten Endkanten (f, g) von benachbarte Wälzbahnen begrenzenden Wandungen (p) voneinander trennen, und daß die beiden Wandungen die ein und dieselbe Wälzbahn begrenzen, derart miteinander verbunden sind, daß sie einen Behälter (q) bilden, der seinerseits mit dem rohrförmigen Teil (27) in seiner von der Achse des Kreuzgelenkes in radialer Richtung am weitesten entfernten Zone durch einen Längsstreifen (28) verbunden ist.

13. Kreuzgelenk nach Anspruch 12, dadurch gekennzeichnet, daß die Wandungen (p), die ein und dieselbe Wälzbahn begrenzen, aus zwei Teilen (29, 30) des rohrförmigen Teiles gebildet sind, die zu beiden Seiten des genannten Längsstreifens ausgeschnitten sind, und daß die ausgeschnittenen Teile derart abgebogen und verformt sind, daß sie die genannten Wandungen bilden, wobei die Länge (l) der ausgeschnittenen Teile geringer ist als diejenige (L) des rohrförmigen Teiles, derart daß an jedem Endbereich des rohrförmigen Teiles (27) ein völlig geschlossener Gürtelring (31a, 31b) verbleibt.

14. Kreuzgelenk nach Anspruch 13, dadurch gekennzeichnet, daß zwischen den Freiräumen, die durch das Ausschneiden und Abbiegen zweier zwei benachbarten Wälzbahnen zugeordneter Wandungen (29, 30) entstehen, ein Längssteg (32) verbleibt.

15. Kreuzgelenk nach einem der Ansprüche 12 bis 14, dadurch gekennzeichnet, daß zwischen zwei Wandungen (p) benachbarter Wälzbahnen ein vorzugsweise aus Kunststoff bestehender Block (E) vorhanden ist, der gegenüber den Wandungen ein Spiel (j) aufweist, derart daß die elastische Verformung der Wandungen durch deren Anschlag gegen den Block (E) begrenzt ist.

16. Kreuzgelenk nach Anspruch 11, dadurch gekennzeichnet, daß die Mittel (m), die eine elastische Querverformung der Wandungen ermöglichen, eine nach außen gerichtete Faltungsstelle (37) beinhalten, welche zwei Wandungen (p) miteinander verbindet, die zwei verschiedene einander benachbarte Wälzbahnen begrenzen.

17. Kreuzgelenk nach einem der Ansprüche 11 bis 16, dadurch gekennzeichnet, daß das rohrförmige Teil aus Federstahl hergestellt ist.

18. Kreuzgelenk nach einem der vorhergehenden Ansprüche, dadurch gekennzeichnet, daß die Breite der von den Wandungen (p) bestimmten Wälzbahn in entspanntem Zustand geringer ist als der Durchmesser der Wälzkörper (4).

Fig.1.

Fig.2.

Fig.3.

# Fig4.

# Fig.5.

# Fig.6.

# Fig. 7.

# Fig.8

# Fig.9.

# Fig.10.